# EUROPÄISCHE PATENTSCHRIFT

(11) **EP 1 350 023 B1**
(45) Veröffentlichungstag und Bekanntmachung des Hinweises auf die Patenterteilung: **05.07.2006**
(21) Anmeldenummer: 01994823.1
(22) Anmeldetag: 20.12.2001
(51) Int. Cl.: F02F 11/00, F02M 35/10, F16J 15/10, F16J 15/12, F16J 15/06

(54) **ANORDNUNG ZUR GASDICHTEN BEFESTIGUNG EINES EINEN VERBINDUNGSFLANSCH AUFWEISENDEN ANSAUGKRÜMMERS AM ZYLINDERKOPF EINER VERBRENNUNGSKRAFTMASCHINE**
ARRANGEMENT FOR THE GAS-TIGHT FIXING OF AN INLET MANIFOLD WITH A CONNECTOR FLANGE TO THE CYLINDER HEAD OF AN INTERNAL COMBUSTION ENGINE
DISPOSITIF PERMETTANT LA FIXATION IMPERMEABLE AUX GAZ D'UN COLLECTEUR D'ADMISSION PRESENTANT UNE BRIDE D'ASSEMBLAGE, A LA CULASSE D'UN MOTEUR A COMBUSTION INTERNE

(30) Priorität: 10.01.2001 DE 10100934
(43) Veröffentlichungstag der Anmeldung: 08.10.2003
(73) Patentinhaber: Carl Freudenberg KG, 69469 Weinheim (DE)
(72) Erfinder: FAURIEN DES PLACES, Fabrice, F-87000 Limoges (FR); JEANNE, Olivier, F-87200 St. Julien (FR); PARENDEL, Xavier, F-87370 Bersac sur Rivacier (FR)
(86) Internationale Anmeldenummer: PCT/EP2001/015167
(87) Internationale Veröffentlichungsnummer: WO 2002/055859

(56) Entgegenhaltungen:
- EP-A- 0 601 285
- DE-A- 3 432 608
- DE-A- 3 714 528
- PATENT ABSTRACTS OF JAPAN vol. 017, no. 447 (M-1464), 17. August 1993 (1993-08-17) & JP 05 099087 A (TOYOTA MOTOR CORP), 20. April 1993 (1993-04-20)
- PATENT ABSTRACTS OF JAPAN vol. 1996, no. 12, 26. Dezember 1996 (1996-12-26) & JP 08 210510 A (HONDA MOTOR CO LTD;NIPPON RIIKURESU KOGYO KK; ASAHI ORGANIC CHEM IND C), 20. August 1996 (1996-08-20)

## Beschreibung

Die vorliegende Erfindung betrifft eine Anordnung zur gasdichten Befestigung eines einen Verbindungsflansch aufweisenden Ansaugkrümmers am Zylinderkopf einer Verbrennungskraftmaschine.

Eine Anordnung zur gasdichten Befestigung eines einen Verbindungsflansch aufweisenden Ansaugkrümmers am Zylinderkopf einer Verbrennungskraftmaschine ist aus der EP 0 601 285 B1 bekannt. Diese Anordnung weist eine Dichtung aus elastomerem Werkstoff auf, welche der dem Zylinderkopf zugewandten Seite des Ansaugkrümmerflansches festlegbar ist. Die bekannte Dichtung weist zudem zumindest zwei Dichtflächen auf, die zumindest zwei Ansaugrohre des Ansaugkrümmers während der bestimmungsgemäßen Verwendung umfangsseitig dichtend umschließen und einstückig ineinanderübergehend ausgebildet sind. Nachteil der bekannten Anordnung ist jedoch, dass es zu einer unerwünschten Übertragung von Schwingungen des Zylinderkopfes eines Verbrennungskraftmaschine auf den Ansaugkrümmer kommt.

Aufgabe der vorliegenden Erfindung ist es, eine Anordnung zur gasdichten Befestigung eines Ansaugkrümmers an einem Zylinderkopf anzugeben, bei welcher die Übertragung von Schwingungen zwischen Motor und Ansaugrohr verringert wird.

Diese Aufgabe wird gelöst durch eine Anordnung zur gasdichten Befestigung eines einen Verbindungsflansch aufweisenden Ansaugkrümmers am Zylinderkopf einer Verbrennungskraftmaschine, mit einer Dichtungsplatte, welche zwischen dem Verbindungsflansch des Ansaugkrümmers und dem Zylinderkopf angeordnet ist und in der wenigstens ein Luftdurchlass für das wenigstens eine Ansaugrohr des Ansaugkrümmers ausgebildet ist, mit ersten Verbindungsmitteln zum Verbinden der Dichtungsplatte mit dem Ansaugkrümmer, welche in oder an der Dichtungsplatte ausgebildeten Aufnahmen angeordnet sind, mit zweiten Verbindungsmitteln zum Verbinden des Verbindungsflansches und / oder der Dichtungsplatte mit dem Zylinderkopf, wobei an der Dichtungsplatte auf deren einer Seite um den wenigstens einen Luftdurchlass erste Dichtungsmittel zur Anlage an dem Ansaugkrümmer vorgesehen sind, wobei wenigstens ein zwischen dem ersten Verbindungsmittel und der Dichtungsplatte wirkendes elastisches Element vorgesehen ist, wobei die ersten Dichtmittel als Dichtrippen ausgebildet sind, die einen Dichtabschnitt und einen Bewegungsabschnitt aufweisen, und wobei die ersten Verbindungsmittel mit dem wenigstens einen elastischen Element und die ersten Dichtmittel mit dem Dichtabschnitt und dem Bewegungsabschnitt derart ausgebildet und angeordnet sind, dass eine schwingende Relativbewegung zwischen Dichtungsplatte und Ansaugkrümmer ermöglicht wird.

Aufgrund der erfindungsgemäßen Gestaltung ist es möglich, die Übertragung von Schwingungen zwischen zwei Bauteilen, hier dem Zylinderkopf einer Verbrennungskraftmaschine und dem Ansaugkrümmer erheblich zu reduzieren. Insbesondere ist es aufgrund der vorliegenden Erfindung möglich, eine weitgehende Entkopplung der Schwingungen und dennoch eine gute Abdichtung zwischen Ansaugkrümmer und Zylinderkopf zu erreichen. Dies wird erfindungsgemäß insbesondere durch die Gestaltung der ersten Dichtmittel als Dichtrippen mit einem Dichtabschnitt und einem Bewegungsabschnitt und die Anordnung der ersten Verbindungsmittel über elastische Elemente an der Dichtungsplatte erreicht.

Erfindungsgemäß ist weiterhin vorgesehen, dass die Dichtungsplatte von dem Verbindungsflansch des Ansaugkrümmers beabstandet ist. Diese Gestaltung ermöglicht es, eine gute Entkopplung der Schwingungen zwischen Zylinderkopf und Ansaugrohr zu erreichen.

Trotz des schwingenden Relativbewegung zwischen Dichtungsplatte und Ansaugkrümmer wird eine besonders gute Abdichtung dadurch erreicht, dass die Dichtrippen durch an dem Ansaugkrümmer ausgebildete Kompressionsmittel unter Spannung gesetzt werden. Diese Kompressionsmittel, welche auf den Dichtabschnitt der Dichtrippen wirken, ermöglichen es, eine hervorragende Abdichtung zu erzielen.

Eine weitere Verbesserung wird dadurch erreicht, dass im eingebauten Zustand der Bewegungsabschnitt im Wesentlichen spannungsfrei ist oder in einem geringeren Umfang unter Spannung steht, als der durch die Kompressionsmittel unter Spannung gesetzte Dichtungsabschnitt. Aufgrund des im Wesentlichen spannungsfreien oder nur in einem geringeren Umfang unter Spannung stehendem Bewegungsabschnitts wird eine verbesserte Schwingungsisolierung beziehungsweise Schwingungsentkopplung erreicht, ohne dass dabei die Dichtwirkung der erfindungsgemäßen Anordnung beeinträchtigt würde.

Vorteilhafterweise ist weiterhin vorgesehen, dass die Kompressionsmittel den Dichtabschnitt in einer Richtung im Wesentlichen parallel zur Dichtungsplatte unter Spannung setzen. Hierdurch wird nicht nur eine gute Abdichtung, sondern gleichzeitig eine besonders gute Schwingungsisolation ermöglicht.

Erfindungsgemäß ist weiterhin vorgesehen, dass die Kompressionsmittel an dem Befestigungsflansch des Ansaugkrümmers ausgebildete Nuten sind, welche den Dichtabschnitt der ersten Dichtmittel aufnehmen.

Eine besonders gute Abdichtung wird auch dadurch erreicht, dass an den Dichtrippen Vorsprünge ausgebildet sind, welche insbesondere in einer Richtung in Wesentlichen parallel zur Dichtungsplatte verlaufen.

Erfindungsgemäß ist weiterhin vorteilhafterweise vorgesehen, dass der Bewegungsabschnitt zwischen Dichtabschnitt und der Dichtplatte angeordnet ist.

Gemäß einer besonders vorteilhaften Ausgestaltung der Erfindung ist vorgesehen, dass die ersten Verbindungsmittel einen Kopf aufweisen, welcher sich über das elastische Element an einem Stützabschnitt der Aufnahme abstützt. Das zwischen der Aufnahme und dem Verbindungsmittel wirkende elastische Element verringert die Übertragung von Schwingung der Dichtungsplatte auf den Ansaugkrümmer.

Gemäß einer Fortbildung dieses Erfindungsgedankens ist vorgesehen, dass der Stützabschnitt in einer Ebene angeordnet ist, welche parallel zur Dichtungsplatte zum Ansaugkrümmer hin verschoben ist. Hierdurch wird insbesondere eine versenkte Anordnung des Kopfes des ersten Verbindungsmittels und eine flache Bauform der erfindungsgemäßen Anordnung erreicht.

Erfindungsgemäß ist weiterhin vorgesehen, dass die Aufnahmen Ausnehmungen für die ersten Verbindungsmittel aufweisen, durch die sich die ersten Verbindungsmittel erstrecken.

Eine besonders gute Schwingungsentkopplung in unterschiedlichen Richtungen wird dadurch erreicht, dass die ersten Verbindungsmittel über die elastischen Elemente in der ersten Ausnehmung geführt sind.

Eine besonders Abdichtung wird auch dadurch erreicht, dass an einer anderen Seite der Dichtungsplatte zweite Dichtungsmittel zur Anlage an dem Zylinderkopf vorgesehen sind.

Weiterhin hat es sich bewährt, dass die Dichtungsplatte Durchgänge für die zweite Verbindungsmittel aufweist.

Nachfolgend ist anhand der Zeichnung eine vorteilhafte Ausgestaltung einer erfindungsgemäßen Anordnung näher beschrieben.

Es zeigen:
- Fig. 1: eine Draufsicht auf eine erfindungsgemäße Dichtungsplatte,
- Fig. 2: einen Schnitt durch die in Fig. 1 dargestellte Dichtungsplatte entlang der Linie C-C im eingebauten Zustand,
- Fig. 3: einen Schnitt durch die in Fig. 1 dargestellte Dichtungsplatte entlang der Linie A-A,
- Fig. 4: einen Schnitt durch die in Fig. 1 dargestellte Dichtungsplatte entlang der Linie B-B,
- Fig. 5: einen Schnitt durch die in Fig. 1 dargestellte Dichtungsplatte entlang der Linie C-C,
- Fig. 6: einen Schnitt durch die in Fig. 1 dargestellte Dichtungsplatte entlang der Linie D-D und
- Fig. 7: eine vergrößerte Darstellung eines Ausschnittes aus Fig. 3.

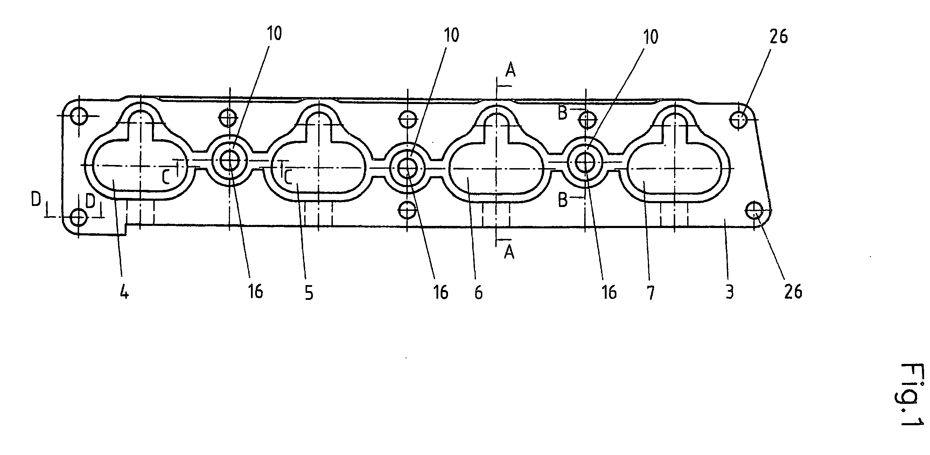

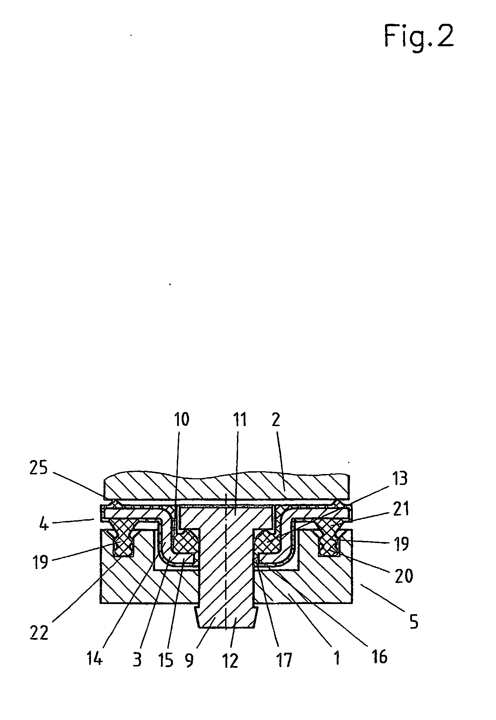

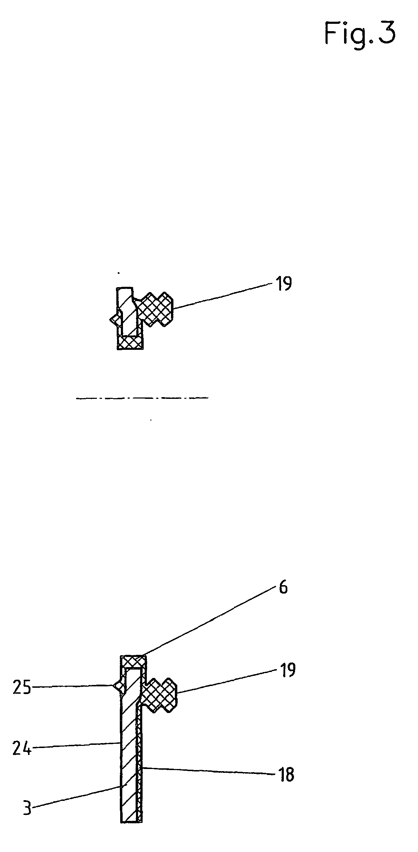

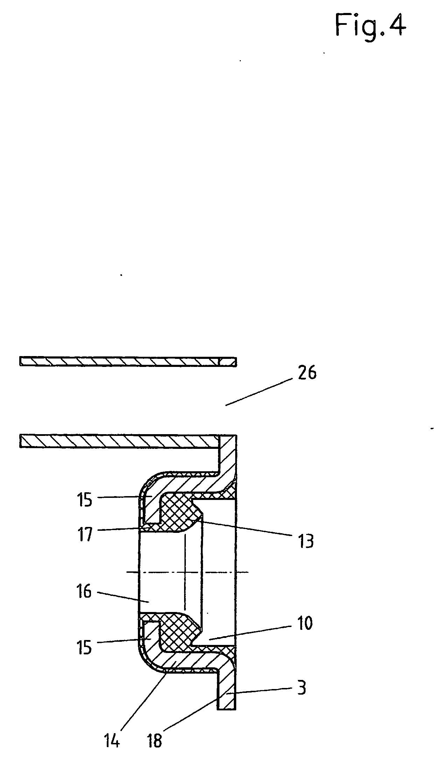

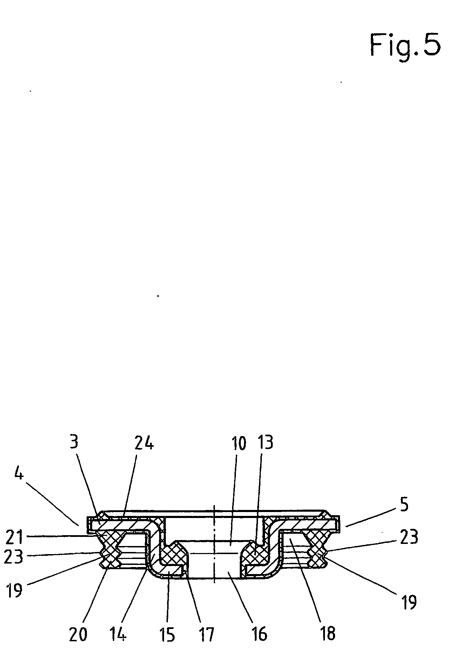

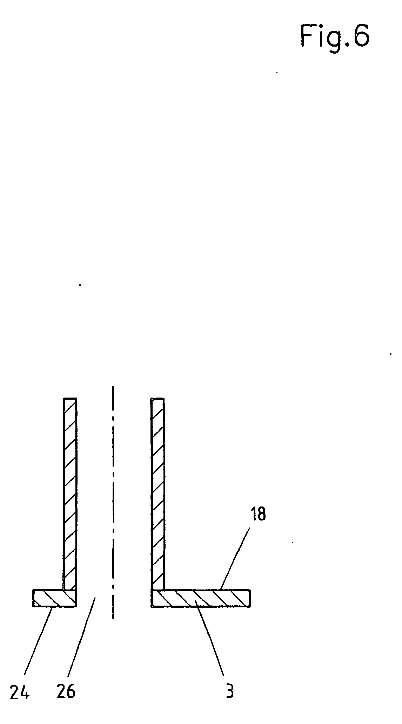

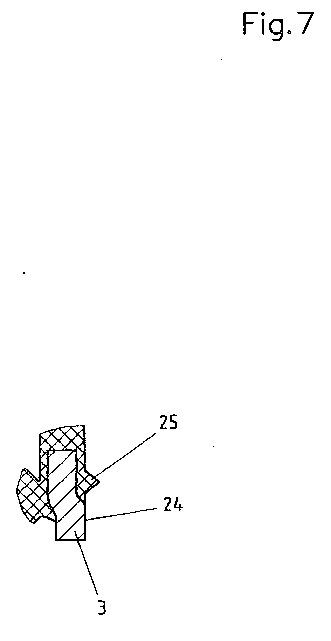

In den Figuren ist eine Anordnung zur gasdichten Befestigung eines einen Verbindungsflansch aufweisenden Ansaugkrümmers 1 am Zylinderkopf 2 einer Verbrennungskraftmaschine dargestellt. Die erfindungsgemäße Anordnung weist eine Dichtungsplatte 3 auf, welche zwischen dem Verbindungsflansch 1 des Ansaugkrümmers und dem Zylinderkopf 2 angeordnet werden kann. Während in den Fig. 1 und 3 bis 7 die Dichtungsplatte 3 allein dargestellt ist, ist bei der ausschnittsweisen Darstellung der Dichtplatte 3 in Fig. 2 diese in ihrem eingebauten Zustand dargestellt, in der diese zwischen dem Ansaugkrümmer 1 und Zylinderkopf 2 einer Verbrennungskraftmaschine 2 angeordnet ist. Die Dichtungsplatte 3 weist bei der in der Fig. 1 dargestellten Ausführungsform vier Luftdurchlässe 4, 5, 6, 7 für die vier Ansaugrohre des Ansaugkrümmers 1 auf.

Zum Verbinden der Dichtungsplatte 3 mit dem Ansaugkrümmer 1 sind erste Verbindungsmittel 9 vorgesehen, welche in einer in der Dichtungsplatte 3 ausgebildeten Aufnahme 10 angeordnet sind. Bei der in Fig. 2 dargestellten Ausführungsform sind die ersten Verbindungsmittel 9 als ein Bolzen ausgebildet, der auf seiner dem Zylinderkopf 2 zugewandten Seite einen erweiterten Kopf 11 aufweist und an seinem dem Verbindungsflansch 1 zugewandten Ende einen sich erweitemden Abschnitt 12 aufweist. Anstelle des in Fig. 2 dargestellten Bolzens 9 können auch andere geeignete Verbindungsmittel, zum Beispiel ein Gewinde aufweisende Schrauben, verwendet werden. Diese können entweder direkt in den Verbindungsflansch eingeschraubt werden oder zusammen mit einer Mutter eine Verbindung zwischen der Dichtungsplatte 3 und dem Verbindungsflansch 1 ermöglichen.

Im Bereich der Aufnahme 10 ist ein elastisches Element 13 für das erste Verbindungsmittel 9 vorgesehen. Dabei ist das elastische Element 13 derart zwischen dem ersten Verbindungsmittel 9 und der Dichtungsplatte 3 angeordnet, dass eine elastische federnde Verbindung zwischen den Dichtungsplatte 3 und dem Verbindungsflansch 1 entsteht. Hierzu stützt sich das Verbindungsmittel 9 mit seinem Kopf 11 an dem auf dem Grund der Aufnahme 10 angeordneten elastischen Element 13 ab.

Die Aufnahme 10 weist einen zylindrischen Abschnitt 14 auf, welcher an der dem Ansaugkrümmer 1 zugewandten Seite der Dichtungsplatte 3 angeordnet ist. Dieser zylindrische Abschnitt 14 wird an seinem dem Ansaugkrümmer 1 zugewandten Ende von einem Stützabschnitt 15 begrenzt, an dem sich der Kopf 11 des ersten Verbindungsmittels 9 abstützen kann. Der Stützabschnitt 15 ist in einer Ebene angeordnet, welche parallel zur Dichtungsplatte 3 zum Ansaugkrümmer 1 hin verschoben ist. Hierdurch wird eine versenkte Anordnung des Kopfes 11 der ersten Verbindungsmittel 9 erreicht. Die Aufnahme 10 weist weiterhin Ausnehmungen 16 auf, durch die sich ersten Verbindungsmittel 9 erstrecken. Dabei erstreckt sich Führungsabschnitt (7) der elastischen Elemente 13 derart in dem Bereich der Ausnehmungen 16, dass die ersten Verbindungsmittel 9 über die elastischen Elemente 13 in der Ausnehmung 16 geführt werden.

Insgesamt weist die in der Fig. 1 dargestellte Dichtungsplatte 3, welche aus Metall hergestellt ist, drei Aufnahmen 10 mit jeweils einer Ausnehmung 16 auf, wobei die Aufnahmen 10 jeweils zwischen zwei Luftdurchlässen 4, 5 beziehungsweise 5, 6 beziehungsweise 6, 7 angeordnet ist.

Die Dichtungsplatte 3 weist auf ihrer einen Seite 18 um die Luftdurchlässe 5, 6, 7, 8 erste Dichtungsmittel 19 zur Anlage an dem Ansaugkrümmer 1 auf. Dabei erstrecken sich die ersten Dichtungsmittel 19 jeweils um einen Luftdurchlass 5, 6, 7, 8 in einem geschlossenen Linienzug. Die ersten Dichtmittel 19 sind dabei als Dichtrippen ausgebildet, welche einen Dichtabschnitt 20 und einen Bewegungsabschnitt 21 aufweisen. Die Dichtrippen stehen dabei erfindungsgemäß aus einem Elastomer, welches durch Vulkanisation mit der Dichtungsplatte 3 verbunden ist. Zur Erzielung einer guten Dichtung werden die Dichtrippen 19 durch an dem Ansaugkrümmer 1 ausgebildete Kompressionsmittel 22 unter Spannung gesetzt. Bei der in Fig. 2 dargestellten Ausführungsform sind die Kompressionsmittel 22 als Nuten ausgebildet, welche in dem Befestigungsflansch des Ansaugkrümmers 1 ausgebildet sind und die die Dichtabschnitte 20 der ersten Dichtmittel 19 aufnehmen. Eine Kompression der Dichtabschnitte 20 durch die Nuten 22 wird dabei dadurch erreicht, dass die Nuten 22 ein Innenmaß aufweisen, welches etwas geringer ist, als das Außenmaß der Dichtrippen vor dem Einfügen in die Nut 22. Bei dieser Gestaltung werden die Dichtabschnitte 20 durch die Kompressionsmittel 22 in einer Richtung im Wesentlichen parallel zur Dichtungsplatte 3 unter Spannung gesetzt.

Der Bewegungsabschnitt 21 ist zwischen dem Dichtabschnitt 20 und Dichtungsplatte 3 angeordnet. Der Bewegungsabschnitt 21 ist im eingebauten Zustand im Wesentlichen spannungsfrei oder steht in einem geringeren Umfang unter Spannung als der durch die Kompressionsmittel 22 unter Spannung gesetzte Dichtungsabschnitt 21.

Zur Erzielung einer besseren Abdichtung weisen die ersten Dichtmittel 19 Vorsprünge 23 auf, welche in einer Richtung im Wesentlichen parallel zur Dichtungsplatte 3 verlaufen und sich insbesondere entlang des gesamten Umfangs der ersten Dichtungsmittel 19 erstrecken.

Die Dichtungsplatte 3 ist von dem Verbindungsflansch des Ansaugkrümmers 1 beabstandet angeordnet, wie dies in Fig. 2 erkennbar ist. Dabei sind die ersten Verbindungsmittel 9, die Aufnahmen 10 für die ersten Verbindungsmittel 9 mit dem elastischen Element 13 und die ersten Dichtmittel 19 derart ausgebildet und angeordnet, dass eine schwingende Relativbewegung zwischen Dichtungsplatte 3 und Ansaugkrümmer 1 ermöglicht wird. Aufgrund dieser schwingenden Relativbewegung kann eine Entkopplung von Schwingungen zwischen dem Zylinderkopf 2 einer Verbrennungskraftmaschine und dem Ansaugkrümmer 1 erreicht beziehungsweise verbessert werden.

Um eine gute Abdichtung auch zwischen Dichtungsplatte 3 und Zylinderkopf 2 zu erzielen, weist die Dichtungsplatte 3 an ihrer anderen Seite 24 zweite Dichtungsmittel 25 zur Anlage am Zylinderkopf 2 auf. Dabei bestehen die zweiten Dichtungsmittel 25 aus Elastomer, welches durch Vulkanisieren mit der Dichtungsplatte 3 verbunden ist. Die zweiten Dichtungsmittel 25 erstrecken sich dabei jeweils um einen Luftdurchlass 4, 5, 6, 7 in einem geschlossenen Linienzug.

Weiterhin weist die Dichtungsplatte 3 Durchgänge 26 für zweite Verbindungsmittel auf, durch die der Verbindungsflansch des Ansaugkrümmers 1 oder direkt die Dichtungsplatte 3 mit dem Zylinderkopf 2 verbunden werden kann. Bei der in Fig. 1 dargestellten Ausführungsform sind dabei insgesamt acht Durchgänge 26 vorgesehen.

## Patentansprüche

1. Anordnung zur gasdichten Befestigung eines einen Verbindungsflansch aufweisenden Ansaugkrümmers (1) am Zylinderkopf (2) einer Verbrennungskraftmaschine, mit einer Dichtungsplatte (3), welche zwischen dem Verbindungsflansch des Ansaugkrümmers (1) und dem Zylinderkopf (2) angeordnet ist und in der wenigstens ein Luftdurchlass (4, 5, 6, 7) für das wenigstens eine Ansaugrohr des Ansaugkrümmers (1) ausgebildet ist, mit ersten Verbindungsmitteln (9) zum Verbinden der Dichtungsplatte (3) mit dem Ansaugkrümmer (1), welche in in oder an der Dichtungsplatte (3) ausgebildeten Aufnahmen (10) angeordnet sind, mit zweiten Verbindungsmitteln zum Verbinden des Verbindungsflansches (1) und / oder der Dichtungsplatte (3) mit dem Zylinderkopf (2), wobei an der Dichtungsplatte (3) auf deren einer Seite (18) um den wenigstens einen Luftdurchlass (4, 5, 6, 7) erste Dichtungsmittel (19) zur Anlage an dem Ansaugkrümmer (1) vorgesehen sind, wobei wenigstens ein zwischen den ersten Verbindungsmitteln (9) und der Dichtungsplatte (3) wirkendes elastisches Element (13) vorgesehen ist, wobei die ersten Dichtmittel (19) als Dichtrippen ausgebildet sind, die einen Dichtabschnitt (20) und einen Bewegungsabschnitt (21) aufweisen, und wobei die ersten Verbindungsmittel (9) mit dem wenigstens einen elastischen Element (13) und die ersten Dichtmittel (19) derart ausgebildet und angeordnet sind, dass eine schwingende Relativbewegung zwischen Dichtungsplatte (3) und Ansaugkrümmer (1) ermöglicht wird.

2. Anordnung nach Anspruch 1, **dadurch gekennzeichnet, dass** die Dichtungsplatte (3) von dem Verbindungsflansch des Ansaugkrümmers (1) beabstandet ist.

3. Anordnung nach Anspruch 1 oder 2, **dadurch gekennzeichnet, dass** die Dichtrippen (19) durch an dem Ansaugkrümmer (1) ausgebildete Kompressionsmittel (22) unter Spannung gesetzt werden.

4. Anordnung nach Anspruch 3, **dadurch gekennzeichnet, dass** im eingebauten Zustand der Bewegungsabschnitt (21) im Wesentlichen spannungsfrei ist oder in einem geringeren Umfang unter Spannung steht, als der durch die Kompressionsmittel (22) unter Spannung gesetzte Dichtungsabschnitt (20).

5. Anordnung nach Anspruch 3 oder 4, **dadurch gekennzeichnet, dass** die Kompressionsmittel (22) den Dichtabschnitt (20) in einer Richtung im Wesentlichen parallel zur Dichtungsplatte (3) unter Spannung setzen.

6. Anordnung nach einem der Ansprüche 3 bis 5, **dadurch gekennzeichnet, dass** die Kompressionsmittel (22) an dem Befestigungsflansch des Ansaugkrümmers (1) ausgebildete Nuten sind, welche den Dichtabschnitt (20) der ersten Dichtmittel (19) aufnehmen.

7. Anordnung nach einem der Ansprüche 1 bis 6, **dadurch gekennzeichnet, dass** an den Dichtrippen (19) Vorsprünge ausgebildet sind, welche insbesondere in einer Richtung im Wesentlichen parallel zur Dichtungsplatte (3) verlaufen.

8. Anordnung nach einem der Ansprüche 1 bis 7, **dadurch gekennzeichnet, dass** der Bewegungsabschnitt (21) zwischen Dichtabschnitt (20) und Dichtungsplatte (3) angeordnet ist.

9. Anordnung nach einem der Ansprüche 1 bis 8, **dadurch gekennzeichnet, dass** die ersten Verbindungsmittel (9) jeweils einen Kopf (11) aufweisen, welcher sich über das elastische Element (13) an einem Stützabschnitt (15) der Aufnahme (10) abstützt.

10. Anordnung nach Anspruch 9, **dadurch gekennzeichnet, dass** der Stützabschnitt (15) in einer Ebene angeordnet ist, welche parallel zur Dichtungsplatte (3) zum Ansaugkrümmer (1) hin verschoben ist.

11. Anordnung nach einem der Ansprüche 1 bis 10, **dadurch gekennzeichnet, dass** die Aufnahmen (10) Ausnehmungen (16) für die ersten Verbindungsmittel (9) aufweisen, durch die sich die ersten Verbindungsmittel (9) erstrecken.

12. Anordnung nach Anspruch 11, **dadurch gekennzeichnet, dass** die ersten Verbindungsmittel (9) über die elastischen Elemente (13) in den Ausnehmungen (16) geführt sind.

13. Anordnung nach einem Ansprüche 1 bis 12, **dadurch gekennzeichnet, dass** an einer anderen Seite (24) der Dichtungsplatte (3) zweite Dichtmittel (25) zur Anlage an dem Zylinderkopf (2) vorgesehen sind.

14. Anordnung nach einem Ansprüche 1 bis 13, **dadurch gekennzeichnet, dass** die Dichtungsplatte (3) Durchgänge (26) für die zweite Verbindungsmittel aufweist.

## Claims

1. Arrangement for gas-tight fixing of an induction manifold (1) having a connecting flange to the cylinder head (2) of an internal combustion engine, comprising a sealing plate (3), which is disposed between the connecting flange of the induction manifold (1) and the cylinder head (2) and in which at least one air vent (4, 5, 6, 7) for the at least one induction pipe of the induction manifold (1) is configured, comprising first connecting means (9) for connecting the sealing plate (3) to the induction manifold (1), which are disposed in receiving fixtures (10) configured in or on the sealing plate (3), comprising second connecting means for connecting the connecting flange (1) and/or the sealing plate (3) to the cylinder head (2), wherein on the sealing plate (3), on one side (18) thereof around the at least one air vent (4, 5, 6, 7), first sealing means (19) for bearing contact against the induction manifold (1) are provided, wherein at least one elastic element (13), acting between the first connecting means (9) and the sealing plate (3), is provided, wherein the first sealing means (19) are configured as sealing ribs, which have a sealing portion (20) and a motional portion (21), and wherein the first connecting means (9), with the at least one elastic element (13), and the first sealing means (19) are configured and arranged such that an oscillatory relative motion between the sealing plate (3) and the induction manifold (1) is enabled.

2. Arrangement according to Claim 1, **characterized in that** the sealing plate (3) is remote from the connecting flange of the induction manifold (1).

3. Arrangement according to Claim 1 or 2, **characterized in that** the sealing ribs (19) are tensioned by compression means (22) configured on the induction manifold (1).

4. Arrangement according to Claim 3, **characterized in that**, in the installed state, the motional portion (21) is essentially free from tension or is tensioned to a lesser extent than the sealing portion (20) tensioned by the compression means (22).

5. Arrangement according to Claim 3 or 4, **characterized in that** the compression means (22) tension the sealing portion (20) in a direction substantially parallel to the sealing plate (3).

6. Arrangement according to one of Claims 3 to 5, **characterized in that** the compression means (22) are grooves configured on the fastening flange of the induction manifold (1), which grooves receive the sealing portion (20) of the first sealing means (19).

7. Arrangement according to one of Claims 1 to 6, **characterized in that** on the sealing ribs (19) projections are configured, which run, in particular, in a direction substantially parallel to the sealing plate (3).

8. Arrangement according to one of Claims 1 to 7, **characterized in that** the motional portion (21) is disposed between the sealing portion (20) and the sealing plate (3).

9. Arrangement according to one of Claims 1 to 8, **characterized in that** the first connecting means (9) respectively have a head (11), which rests, via the elastic element (13), against a supporting portion (15) of the receiving fixture (10).

10. Arrangement according to Claim 9, **characterized in that** the supporting portion (15) is disposed in a plane which is displaced parallel to the sealing plate (3) in the direction of the induction manifold (1).

11. Arrangement according to one of Claims 1 to 10, **characterized in that** the receiving fixtures (10) have recesses (16) for the first connecting means (9), through which the first connecting means (9) extend.

12. Arrangement according to Claim 11, **characterized in that** the first connecting means (9) are guided by means of the elastic elements (13) in the recesses (16).

13. Arrangement according to one of Claims 1 to 12, **characterized in that**, on another side (24) of the sealing plate (3), second sealing means (25) for bearing contact against the cylinder head (2) are provided.

14. Arrangement according to one of Claims 1 to 13, **characterized in that** the sealing plate (3) has passages (26) for the second connecting means.

## Revendications

1. Dispositif pour la fixation imperméable au gaz d'un collecteur d'admission (1) présentant une bride d'assemblage, à la culasse (2) d'un moteur à combustion interne, avec une plaque d'étanchéité (3) qui est disposée entre la bride d'assemblage du collecteur d'admission (1) et la culasse (2) et dans laquelle au moins un passage d'air (4, 5, 6, 7) a été réalisé pour au moins une conduite d'admission du collecteur d'admission (1), avec des premiers moyens d'assemblage (9) servant à assembler la plaque d'étanchéité (3) avec le collecteur d'admission (1), lesquels sont disposés dans des logements (10) réalisés dans ou sur la plaque d'étanchéité (3), avec des deuxièmes moyens d'assemblage servant à assembler la bride d'assemblage (1) et/ou la plaque d'étanchéité (3) avec la culasse (2), un premier moyen d'étanchéité (19) autour d'au moins un passage d'air (4, 5, 6, 7) et s'appuyant sur le collecteur d'admission (1) étant prévu sur une (18) des faces de la plaque d'étanchéité (3), au moins un élément élastique (13) agissant entre les premiers moyens d'assemblage (9) et la plaque d'étanchéité (3) étant prévu, les premiers moyens d'étanchéité (19) étant réalisés sous forme de nervures d'étanchéité, lesquelles présentent une section d'étanchéité (20) et une section de déplacement (21) et les premiers moyens d'assemblage (9) avec au moins un élément élastique (13) et les premiers éléments d'étanchéité (19) étant conçus et disposés de manière telle qu'un déplacement relatif oscillant soit possible entre la plaque d'étanchéité (3) et le collecteur d'admission (1).

2. Dispositif selon la revendication 1, **caractérisé en ce que** la plaque d'étanchéité (3) est écartée de la bride d'assemblage du collecteur d'admission (1).

3. Dispositif selon la revendication 1 ou 2, **caractérisé en ce que** les nervures d'étanchéité (19) sont mises sous tension par un moyen de compression (22) réalisé sur le collecteur d'admission (1).

4. Dispositif selon la revendication 3, **caractérisé en ce qu'**en position de montage, la section de déplacement (21) est pratiquement exempte de contrainte ou se trouve sous tension dans une faible mesure, comme la section d'étanchéité (20) mise sous tension par le moyen de compression (22).

5. Dispositif selon la revendication 3 ou 4, **caractérisé en ce que** les moyens de compression (22) mettent la section d'étanchéité (20) sous tension dans une direction quasiment parallèle à la plaque d'étanchéité (3).

6. Dispositif selon l'une quelconque des revendications 3 à 5, **caractérisé en ce que** les moyens de compression (22) sont des rainures réalisées sur la bride d'assemblage du collecteur d'admission (1), lesquelles rainures accueillent la section d'étanchéité (20) du premier moyen d'étanchéité (19).

7. Dispositif selon l'une quelconque des revendications 1 à 6, **caractérisé en ce que** des saillies sont réalisées sur les nervures d'étanchéité (19), lesquelles s'étendent en particulier dans une direction quasiment parallèle à la plaque d'étanchéité (3).

8. Dispositif selon l'une quelconque des revendications 1 à 7, **caractérisé en ce que** la section de déplacement (21) est disposée entre la section d'étanchéité (20) et la plaque d'étanchéité (3).

9. Dispositif selon l'une quelconque des revendications 1 à 8, **caractérisé en ce que** les premiers moyens d'assemblage (9) présentent chacun une tête (11) qui s'appuie sur une section d'appui (15) du logement (10) via l'élément élastique (13).

10. Dispositif selon la revendication 9, **caractérisé en ce que** la section d'appui (15) est disposée dans un plan, lequel est décalé vers le collecteur d'admission (1) parallèlement à la plaque d'étanchéité (3).

11. Dispositif selon l'une quelconque des revendications 1 à 10, **caractérisé en ce que** les logements (10) présentent des évidements (16) pour les premiers moyens d'assemblage (9) et à travers lesquels s'étirent les premiers moyens d'assemblage (9).

12. Dispositif selon la revendication 11, **caractérisé en ce que** les premiers moyens d'assemblage (9) sont guidés dans les évidements (16) via les éléments élastiques (13).

13. Dispositif selon l'une quelconque des revendications 1 à 12, **caractérisé en ce que**, sur une autre face (24) de la plaque d'étanchéité (3), on a prévu les deuxièmes moyens d'étanchéité (25) en contact sur la culasse (2).

14. Dispositif selon l'une quelconque des revendications 1 à 13, **caractérisé en ce que** la plaque d'étanchéité (3) présente des passages (26) pour les deuxièmes moyens d'assemblage.
